# FASCICULE DE BREVET EUROPEEN

(11) **EP 3 214 897 B1**
(45) Date de publication et mention de la délivrance du brevet: **10.04.2019**
(21) Numéro de dépôt: 16305236.8
(22) Date de dépôt: 01.03.2016
(51) Int. Cl.: H05B 6/06, A47J 36/24, H05B 6/12

(54) **CHAUFFAGE PAR INDUCTION MAGNETIQUE AVEC ENTRETOISE**
HEIZUNG DURCH MAGNETISCHE INDUKTION MIT VERSTREBUNGEN
HEATING BY MAGNETIC INDUCTION WITH SPACER

(43) Date de publication de la demande: 06.09.2017
(73) Titulaire: Adventys, 21250 Seurre (FR)
(72) Inventeur: MALSERT, Jean-Emmanuel, 21250 Seurre (FR)
(74) Mandataire: Pichat, Thierry

(56) Documents cités:
- EP-A1- 1 489 479
- JP-U- 3 174 629
- US-A1- 2011 089 162
- US-B2- 8 344 296

## Description

La présente invention concerne le domaine du chauffage d'un objet de rétention de chaleur par induction magnétique.

Est concerné en particulier un appareil pour chauffer ainsi un tel objet utilisé pour lui-même chauffer ou maintenir au chaud un produit alimentaire.

De US2011089162 et/ou US8344296 il est déjà connu un tel appareil comprenant:
- une entretoise thermiquement isolante interposée entre l'objet de rétention de chaleur et un support pour limiter une quantité de transfert de chaleur depuis l'objet de rétention de chaleur vers le support (telle que la conduction thermique entre ledit objet et le support),
- une unité de contrôle et de chauffage par induction située sous le support et comprenant :
   -- un dispositif de chauffage adapté à créer un champ électromagnétique autour de l'objet de rétention de chaleur, et
   -- un inducteur.

Dans US2011089162, l'appareil comprend en outre :
- un émetteur LWMC portée par l'entretoise thermiquement isolante, pour transmettre des informations concernant un ou plusieurs paramètres propre à l'objet à chauffer,
- et un récepteur LWMC associé au dispositif de chauffage pour que ce dernier tienne compte des paramètres transmis.

Dans US2011089162, l'appareil comprend en outre une étiquette RFID portée par l'entretoise et capable de communiquer avec un lecteur RFID associé au dispositif de chauffage.

A titre d'inconvénients de ces solutions, on peut noter :
- la nécessité de connaître la température de l'objet de rétention de chaleur (ou objet à chauffer) pour pouvoir réguler la température,
- la nécessité en conséquence de disposer soit d'un élément approprié pour recevoir la sonde de température soit d'un appareil qui doit rester en contact physique avec l'objet à chauffer,
- la nécessité d'adjoindre un équipement électronique à émetteur/récepteur,
- la présence de cet équipement sur l'entretoise, alors que cette dernière est soumise à des flux thermiques qui peuvent être importants,
- l'adjonction d'une électronique de traitement compatible LWMC ou RFID,
- la difficulté en conséquence à équiper rapidement et à moindre coût du matériel déjà en service,
- le fait que l'objet de rétention de chaleur, ou objet à chauffer, ne doit pas recouvrir l'équipement électronique à émetteur/récepteur, sinon la communication ne peut être établie,
- un impératif de positionnement précis de l'équipement électronique : l'émetteur et le récepteur doivent être l'un face à l'autre,
- un impératif de planéité entre le fond de l'objet de rétention de chaleur et le capteur de température, pour une bonne qualité de mesures et donc une bonne régulation de température. Le document JP 3 174629U divulgue un appareil pour chauffer un objet selon le préambule de la revendication 1.

L'invention est définie par les caractéristiques des revendications et permet de surmonter une partie au moins de ces inconvénients et vise à éviter que le support se dégrade s'il est trop chauffé, typiquement qu'il se fende sous contrainte thermique.

A cet effet l'invention propose que les moyens précités de l'appareil propres à US2011089162 et/ou US8344296 soient en quelque sorte remplacés, sur l'unité de contrôle et de chauffage par induction, par :
- un capteur de température situé sous le support pour relever la température du support,
- des moyens de commande de l'inducteur reliés au capteur de température pour que le champ électromagnétique soit induit en fonction des relevés du capteur de température,
- et des moyens de limitation de l'énergie transmise par l'inducteur, qui agissent sur les moyens de commande de cet inducteur pour limiter l'importance (l'intensité) dudit champ électromagnétique induit quand la température relevée atteint un seuil prédéterminé inférieur à une température de dégradation du support.

Ainsi, c'est directement la température du support qui sera relevée, sans nécessité sur l'entretoise de l'électronique précitée, et on pourra de façon simple sécuriser la tenue en température du support afin d'éviter qu'il se dégrade, en asservissant l'intensité du champ électromagnétique induit à la température relevée du support, avec fixation d'un seuil.

En pratique, outre qu'elle présentera une conductivité thermique inférieure à celle du support (en étant par exemple thermiquement isolante), l'entretoise aura favorablement une forme permettant de laisser passer la convection naturelle et le rayonnement thermique vers le support. Une forme globalement annulaire conviendra.

Par ailleurs, il a été constaté que, le support se comportant comme une unité de stockage d'énergie, sa température tendait vers la température de l'objet de rétention de chaleur, à très long terme, et, comme les moyens de limitation du champ magnétique empêchent que le support ne dépasse un seuil critique de température, la température de l'objet de rétention de chaleur pouvait dans certaines situations chuter à un niveau très inférieur à celui minimum de maintien au chaud.

Pour apporter une solution à ce problème, il est proposé qu'outre les moyens précités, l'appareil comprenne des moyens de refroidissement qui vont refroidir le support en établissant une différence de température entre le dessus et le dessous de ce support, au moins dans l'environnement du capteur de température, pendant une partie au moins du chauffage par induction magnétique de l'objet de rétention de chaleur.

En extrayant alors une quantité de chaleur du support on va favoriser un écart de température entre l'objet de rétention de chaleur et le support et on va ainsi amener le capteur de température à relever une température inférieure à la température de seuil admissible de ce support, donc pouvoir continuer à ne pas limiter le champ électromagnétique induit assurant le chauffage de l'objet de rétention de chaleur.

Un problème lié à cette solution s'est alors fait jour, relatif aux moyens à utiliser pour assurer cette extraction d'une certaine quantité de chaleur du support lors du chauffage de l'objet de rétention de chaleur.

Il a alors été proposé que ces moyens de refroidissement du support soient situés sous le support, dans l'environnement de l'unité de contrôle et de chauffage par induction, pour participer en outre à une régulation thermique de composants électroniques de l'inducteur ou des moyens de commande de l'inducteur.

En effet, on pourra ainsi obtenir un double effet, sans rendre visibles ni gênants les moyens de refroidissement mis en place.

En termes de solution pratique, on pourra en particulier songer à utiliser pour ces moyens de refroidissement du support au moins un ventilateur, et de préférence deux côte à côte, non visibles depuis le dessus de ce support.

Tests menés, il s'est par ailleurs avéré que, l'objet de rétention de chaleur étant de façon classique chauffé par l'effet inductif, le flux thermique transmis alors par la convection naturelle et le rayonnement de cet objet de rétention de chaleur vers le support chauffait en fait de manière assez lente le support. Si, comme anticipé, le matériau du support présente une bonne conduction thermique (λ > à 0.1 W/m.K), son épaisseur (4 à 40mm de préférence) lui conférera une grande inertie thermique. Aussi y a-t-il un risque d'une élévation de température trop importante dans l'objet de rétention de chaleur.

Une solution à ce problème propose que l'inducteur soit commandé pour délivrer son énergie en fonction d'au moins une pente prédéterminée d'élévation de température.

Et il est en pratique conseillé que cette (au moins une) pente prédéterminée d'élévation de température soit inférieure à 0.04°C par seconde, et de préférence comprenne une première pente inférieure à 0.04°C par seconde, puis une seconde pente encore inférieure, pour les 5 à 10 derniers °C préalable à l'atteinte dudit seuil prédéterminé inférieur à la température de dégradation du support (consigne limite).

Encore une autre solution propose d'utiliser comme capteur de température un capteur sensible au champ magnétique généré. En effet, soumis à un tel champ magnétique, ce capteur s'échauffera alors de manière similaire à l'évolution de la température de l'objet de rétention de chaleur.

Cette solution sera d'autant plus intéressante si, l'appareil comprenant des moyens de limitation de champ électromagnétique, on limite en outre la vitesse de variation de température du capteur de manière très lente et qu'ainsi on limite la vitesse de montée en température de l'objet de rétention de chaleur, le temps que le support monte en température et atteigne la consigne limite imposée. Ceci permettra de réduire le temps de chauffe de l'objet de rétention de chaleur tout en évitant un échauffement excessif du support.

Favorablement, pour un équilibre raisonnable entre le temps pour un chauffage suffisant de l'objet de rétention de chaleur, par exemple pour chauffer jusque vers 80-90°C l'eau d'un article culinaire de chauffage par bain-marie (chafing-dish en anglais), et le refroidissement du dessous du support, il est en outre proposé que le support soit un plan de travail :
- en pierre ou en béton (concrete en anglais),
- et/ou dans un matériau perméable aux champs magnétiques et possédant une bonne conductibilité thermique (λ > à 0.1 W/m.K).

Y compris dans cette application à un article culinaire de chauffage par bain-marie, l'objet de rétention de chaleur sera favorablement constitué soit du récipient pour aliments en lui-même pourvu d'une semelle sensible au champ électromagnétique pour le transformer en chaleur, soit uniquement d'un bloc ferromagnétique, par exemple un disque à disposer au contact, sous une cuve de l'article culinaire en cause.

Concernant l'entretoise, elle comprendra de préférence un coussin creux, par exemple en silicone, à interposer entre l'objet de rétention de chaleur et le support, avec donc une forme favorisant le passage de la convection naturelle et du rayonnement thermique vers le support à travers l'ouverture centrale.

Outre l'appareil qui vient d'être présenté, l'invention concerne un procédé pour chauffer ledit objet de rétention de chaleur, ce procédé comprenant des étapes connues où:
- une entretoise est interposée entre l'objet de rétention de chaleur et un support situé dessous, l'entretoise ayant une conductivité thermique inférieure à celle du support,
- par un inducteur placé sous le support, on crée un champ électromagnétique autour de l'objet de rétention de chaleur, l'entretoise limitant alors une quantité de transfert de chaleur (conductibilité thermique) depuis l'objet de rétention de chaleur vers le support, mais permettant un transfert de chaleur par rayonnement thermique et par convection naturelle vers ce support,
- pendant un tel chauffage par induction, on relève la température du support par un capteur de température,
- on commande l'inducteur pour que le champ électromagnétique soit induit en fonction des relevés du capteur de température et d'une consigne réglée par l'utilisateur, en limitant l'importance (l'intensité) du champ électromagnétique induit quand la température relevée atteint un seuil prédéterminé inférieur à une température de dégradation du support.

Les avantages déjà exprimés pour l'appareil sont reproduits ici.

De préférence, pendant une partie au moins du chauffage par induction magnétique de l'objet de rétention de chaleur, on refroidira le support au moins dans l'environnement du capteur de température placé sous le support, de façon que la température en face inférieure du support soit alors inférieure à la température en face supérieure du support.

Et également de préférence, comme déjà exprimé pour l'appareil:
- sous le support et dans l'environnement de l'inducteur, on pourra souhaiter disposer des moyens de refroidissement du support, pour qu'ils participent en outre à une régulation thermique de composants électroniques de l'inducteur,
- et/ou on refroidira le support par l'intermédiaire d'au moins un ventilateur pendant tout le chauffage par induction de l'objet de rétention de chaleur.

A ce sujet, réaliser ce refroidissement localisé du dessous du support par ce(s) ventilateur(s) permettra, de façon simple, rapide, peu encombrante, fiable et peu consommatrice d'énergie, de créer une convection forcée sous le support et ainsi extraire une quantité effective de chaleur de celui-ci.

Favorablement, pour chauffer suffisamment l'objet concerné tout en préservant le support, il est conseillé que, lors du chauffage par induction de l'objet de rétention de chaleur, soit établie entre cet objet et le support une différence de température comprise entre 20°C et 50°C, et de préférence comprise entre 35°C et 45°C.

La régulation sera favorablement programmée par avance sur cette base, de sorte que dans le temps l'énergie délivrée soit adaptée en conséquence.

Concernant les conditions dans lesquelles assurer les élévations de températures tant de l'objet concerné que du support, de façon que la première soit à la fois suffisante et suffisamment rapide et que la seconde soit suffisamment faible pour ne pas altérer l'intégrité de ce support, on notera encore que l'on pourra par ailleurs juger utile que l'inducteur soit commandé pour délivrer son énergie en fonction d'(au moins)une pente prédéterminée d'élévation de température servant donc de consigne.

En termes de consigne(s), on pourra ainsi en particulier prévoir d'utiliser celle qui aura été définie par l'utilisateur sur un clavier de commande relié auxdits moyens de commande et/ou celle fournie par lesdits moyens de limitation de l'énergie transmise par l'inducteur, cette dernière consigne pouvant être en particulier liée à une température maximale à ne pas dépasser et/ou à son équivalent en énergie à délivrer et/ou à une vitesse maximale de variation de la température enregistrée par le capteur de température placé pour relever la température du support.

En pratique, si un tel choix de prise en compte d'un couple pente prédéterminée d'élévation de température/autre(s) consigne(s) est retenu, on, pourra en particulier en outre choisir que ladite pente soit inférieure à 0.04°C par seconde, et de préférence comprenne une première pente inférieure à 0.04°C par seconde, puis une seconde pente encore inférieure, pour les 5 à 10 derniers °C avant la consigne limite (seuil prédéterminé de température inférieur à la température de dégradation du support).

Ainsi, on sera loin de l'élévation habituelle de température, plus rapide, sur les appareils conventionnels d'apport de chaleur par induction magnétique.

On a vu ci-avant qu'avec un capteur de température du support sensible aux champs magnétiques, le champ créé par l'inducteur se traduira par une légère élévation de température détectée par ledit capteur. Cette vitesse de variation de température du capteur pouvant être du même ordre de grandeur que celle de la semelle ferromagnétique de chauffage de l'élément de rétention de chaleur, plus la puissance du champ sera grande, plus la vitesse de variation de température du capteur et de cette semelle seront rapides.

Aussi est-il proposé:
- à partir des relevés de température par ledit capteur de température, de déduire une vitesse de variation des températures relevées,
- et de limiter l'importance (l'intensité) du champ électromagnétique induit quand ladite vitesse de variation de température sera supérieure à un seuil prédéterminé.

Les caractéristiques ci-avant, et d'autres sont encore détaillées dans la description qui suit faite en référence à des dessins donnés à titre uniquement d'exemples et dans lesquels :
- la figure 1 est un exemple de mobilier conforme à l'invention,
- la figure 2 schématise un circuit opérationnel de l'appareil tel qu'imaginé,
- la figure 3 est une coupe verticale et complète la présentation d'un possible fonctionnement opérationnel de l'appareil,
- la figure 4 schématise les flux d'énergie en jeu,
- la figure 5 est en coupe verticale une alternative de réalisation du fond inductif, ici une pastille indépendante placée sous le fond du récipient à chauffer ou à maintenir au chaud,
- et les figures 6,7 illustrent des courbes de températures (en °C/s).

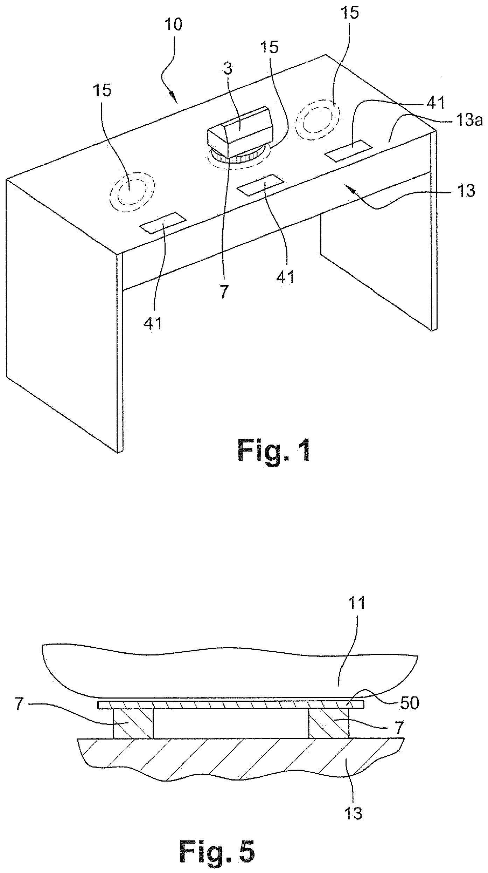

En se référant d'abord à la figure 1, on a schématisé une table à induction permettant de chauffer par induction électromagnétique un objet 3.

Comme connu ce mode de chauffage utilise les propriétés électromagnétiques de certains matériaux qui, lorsqu'ils sont soumis à un champ alternatif, laissent se développer des courants induits (courants de Foucault).

Aussi, l'objet à chauffer 3 est soit pourvu d'une base ferromagnétique 5 (figure 1), soit d'un disque ferromagnétique 50 est placée à son contact (figure 5), entre lui et une entretoise 7 sur laquelle on revient ci-après.

L'objet à chauffer 3 est en matériau thermiquement conducteur pour favoriser, par son propre chauffage, le chauffage ou le maintien au chaud d'un produit alimentaire 9 placé dedans.

L'objet à chauffer 3 peut en particulier être un article métallique (chafing-dish en anglais) adaptée pour chauffer jusque vers 80-90°C de l'eau contenue dans sa cuve 11, à base ferromagnétique 5 dans l'exemple de la figure 1.

Pour son utilisation, l'objet à chauffer 3 est posé au-dessus d'un support 13, avec interposition de l'entretoise 7.

Le matériau du support sera perméable au champ magnétique généré et thermiquement conducteur.

L'entretoise 7 pourrait être intégrée à la base de l'objet 3, à la manière d'une structure en saillie vers le bas, voire hypothétiquement l'être à la surface supérieure 13a du support 13, à la manière d'une structure en saillie vers le haut.

Le terme « interposé » couvre ces différents cas, comme celui où, dans l'exemple préféré retenu, il s'agit d'un élément indépendant adapté à être placé ou posé de façon stable entre la base de l'objet à chauffer 3 et le support 13 qui est ici un support plan. Cette entretoise présente une conductivité thermique inférieure à celle du support.

Le support 13 peut être une table ou un plateau, par exemple, favorablement adapté à constituer un plan de travail intégrant donc au moins une zone de chauffage par induction. Toutefois, ce support 13 risque, au moins avec un tel chauffage prévu de l'article culinaire en cause, d'avoir à supporter des points chauds créés du fait de l'énergie à induire pour chauffer suffisamment l'eau du bain-marie. Ceci risque d'entraîner une altération du support pouvant l'amener à se fendre.

La présence de l'entretoise 7 et certaines caractéristiques encore développées ci-après évitant cela, il va être possible que le support 13 demeure favorablement dans un matériau perméable aux champs magnétiques et possédant une bonne conductibilité thermique (λ > à 0.1 W/m.K), avec de préférence une épaisseur comprise entre 4mm et 40mm.

Cette entretoise 7 et les composants qui suivent appartiennent à l'appareil de chauffage inductif 10, lesdits composants pouvant être considérés comme appartenant à une unité 20 de contrôle et de chauffage qui, outre un capteur de température 35 relié (c'est-à-dire communiquant avec) des moyens ou unité 31 de commande de l'inducteur (auquel il transmet ses relevés), comprend un dispositif de chauffage comprenant une unité électronique de puissance 30 reliée à un inducteur 15.

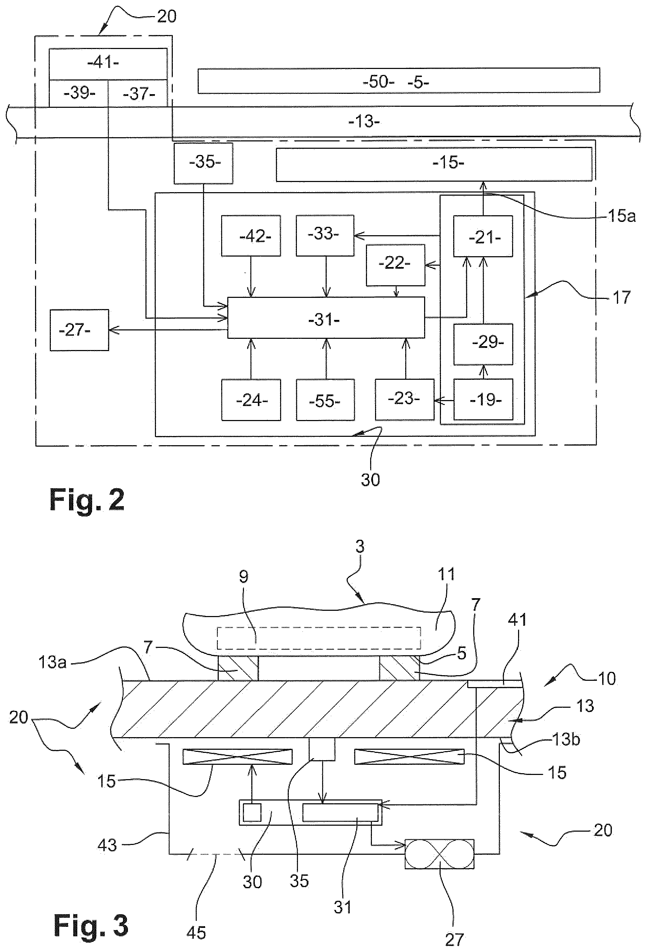

Le champ magnétique par l'intermédiaire duquel va pouvoir être chauffé l'objet 3 posé sur le support 13 est obtenu par une bobine inductrice 15 (figure 2 notamment) alimentée en courant alternatif à haute fréquence 15a.

La bobine 15 (appelée aussi inducteur) est commandée grâce à une carte de puissance 17 qui convertit la fréquence du réseau (secteur 19; par exemple 230V, 50Hz) à une fréquence plus élevée, par exemple de 20 à 50 kHz (haute fréquence du courant alternatif 15a).

Ce signal est obtenu par un onduleur 21 qui recrée ce courant alternatif à haute fréquence après un redressement par un pont redresseur 29. On régule le courant en jouant sur la fréquence du signal transmis à la bobine 15 par l'onduleur 21 piloté par l'unité de commande 31.

Le fond ferromagnétique de l'objet à chauffer 3 (base 5 ou pastille 50) soumis au champ magnétique alternatif voit naître des courants induits (de Foucault) qui échauffent le récipient.

L'unité de commande 31 est alimentée par l'alimentation basse puissance 23 qui elle-même est alimentée par le pont redresseur 29.

Reliés aussi l'unité de commande 31, et lui fournissant des données utiles pour la régulation, on trouve un dispositif 33 de sécurité (sécurité de surtension, de présence d'un objet à zone ferromagnétique, surconsommation...), le capteur 35 de température du support 13, un capteur 24 de température de l'unité 31, une unité de mesure de puissance 22, des moyens mémoire 42 (contenant au moins des paramètres, ou consignes, limites à ne pas dépasser) et un tableau de bord utilisateur 41 accessible à ce dernier (sur le dessus 13a).

Le tableau de bord utilisateur 41 comprend des afficheurs 37 et un clavier de commande 39 sur lequel l'utilisateur peut agir pour, dans une certaine mesure, adapter à sa convenance le chauffage de l'article 3 posé sur l'entretoise 7.

En tant que données de consigne disponibles dans les moyens mémoire 42 pour l'unité de commande 31, on pourra utilement prévoir, en combinaison ou non, et à ne pas dépasser, une température maximum (du support 13) pouvant être détectée par le capteur 35, une énergie ou une puissance maximum pouvant être délivrée par l'inducteur 15, une vitesse maximum de variation de température détectée par le capteur 35, une autre température de consigne maximum, de façon que le champ magnétique créé via l'inducteur, ou plus généralement l'énergie transmise par le présent dispositif vers l'objet 3, soit adapté afin que le support 13 ne soit pas dégradé .

En relation directe avec l'unité de puissance 17, une unité de mesure de puissance 22 calcule en temps réel la puissance active consommée par le fond ferromagnétique de l'objet à chauffer 3 (base 5 ou semelle 50).

Ainsi, les moyens de commande 31 définiront une unité de calcul et de contrôle qui, en fonction de données d'entrée (issues notamment du capteur de température 35, des valeurs de consignes 42 préalablement entrées en mémoire, et du clavier 39), va commander, outre donc l'onduleur 21, les moyens 27 qui vont permettre favorablement de placer le fond 13b du support à une température inférieure à celle de son dessus 13a.

Et on aura compris que c'est tout ou partie de ces consignes qui, fournies à l'unité ou carte 31 et à son programme de commande asservie, vont donc servir de moyens de limitation de l'énergie transmise, donc du champ électromagnétique, quand les températures vont s'élever et surtout atteindre un seuil proche (par exemple à 5°C) de la température de dégradation du support 13.

Les moyens 27 de refroidissement de ce support pourront comprendre un ou plusieurs ventilateur(s).

Comme on le voit aussi figure 3, le capteur de température 35, disposé donc pour relever la température du support 13, est situé dans l'environnement du(des) ventilateur(s) 27 disposé(s) sous le support 13, pour le refroidir. Chaque ventilateur 27 pourra en outre favorablement être situé à proximité immédiate des composants de l'induction, de la carte 31, et de l'unité électronique de puissance 30, pour participer aussi à leur refroidissement, si nécessaire.

Avec le (chaque) ventilateur 27 placé sous la commande de la carte de commande 31, le flux d'air de refroidissement qui en est issu sera adapté en fonction de la température du support 13 relevé par le capteur 35, par exemple par variation de la vitesse de rotation des pales du(de chaque) ventilateur, et typiquement de manière que cette vitesse soit plus élevée si la température relevée augmente, voire en tenant compte de la température ambiante relevée par un capteur 55.

En particulier le(s) ventilateur(s), par exemple au nombre de deux, pourra(ont) être disposé(s) en entrée d'un caisson 43 fermé pourvu d'une sortie d'air 45 et fixé sous le support 13. Le caisson 43 renfermera en particulier les éléments 15,30,31,35.

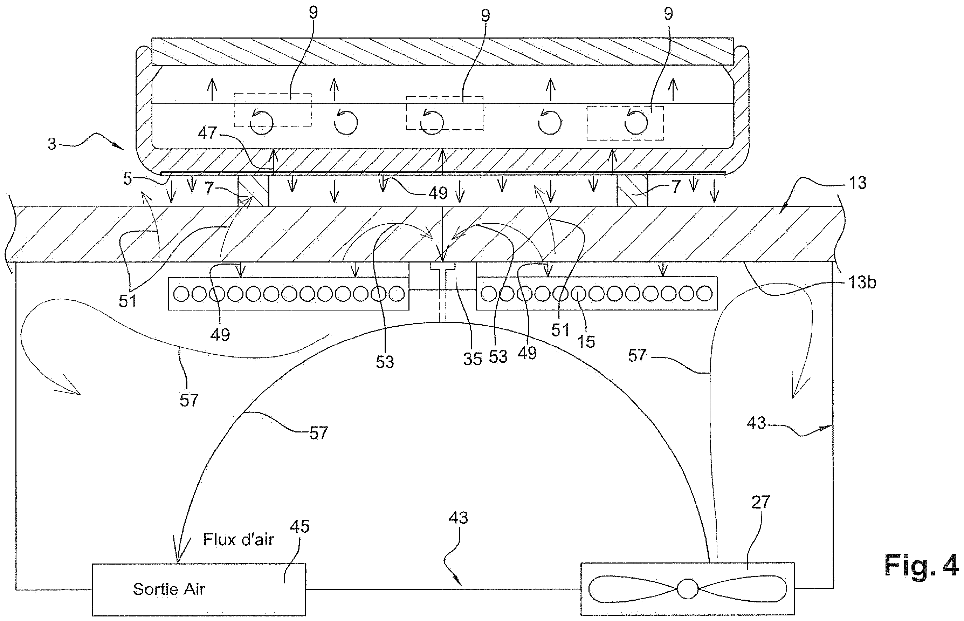

L'intérieur du caisson fermé 43 est balayé par le flux 57 de fluide généré par les moyens 27 de refroidissement du support, de sorte son dessous 13b reçoive efficacement ce flux (figure 4).

Pour pouvoir assurer le chauffage, y compris dans une situation de maintien au chaud, d'un objet compatible induction, comme le récipient 3, il faut connaître la température du récipient afin de pouvoir réguler cette température et ainsi la rendre stable.

La solution ici présentée permet de s'affranchir d'une mesure directe de température de ce récipient, comme prévu dans l'art antérieur, et libère ainsi la contrainte d'un matériel lié aux formes et tailles de l'objet 3.

En effet, avec la présente solution et comme schématisé figure 4, lorsque la zone ferromagnétique de l'objet 3 va recevoir le champ magnétique généré par l'inducteur 15, vont être induits par ce champ, non seulement un premier flux de chaleur 47 transmis par conductions thermique et naturelle vers les aliments 9, mais aussi un second flux de chaleur 49 transmis en direction du support 13, via un rayonnement thermique et de la convection thermique naturelle, la conduction thermique directe étant supprimée, ou notablement réduite, par l'entretoise 7, qui peut être thermiquement isolante.

Ainsi (loi de Fourier), plus la température de l'objet 3 va être élevée, plus les flux de chaleur précités seront élevés. Au bout d'un certain temps, la température du dessus du support 13 va donc tendre à devenir l'image de la température de l'objet 3 (ou de sa base ferromagnétique), le support 13 se comportant comme une unité de stockage d'énergie (sensiblement à la manière d'un poêle de masse ou d'une charge de condensateur en électronique).

Grâce à l'entretoise 7, la température du dessus 13a de l'objet 3 va donc pouvoir demeurer notablement inférieure à la température de cet objet (ou de sa base ferromagnétique).

Transmise par conduction thermique jusqu'au-dessous du support 13, c'est cette température « limitée » que va relever le capteur de température 35, donnée en fonction de laquelle l'asservissement du chauffage est géré.

Via la carte de commande 31, l'unité 20 de contrôle et de chauffage va alors réguler la température qui reçoit cette donnée de l'objet 3, ceci donc de manière indirecte en utilisant les phénomènes de convection et radiations thermiques comme mode de transmission sans fil, sans nécessité de connexion LWMC ou RFID. Les temps de propagation de chaleur étant typiquement assez longs, l'asservissement sera favorablement réglé en fonction de ce paramètre et pour limiter les variations de température rapide détectées par le capteur 35, pour éviter toute surchauffe.

Un inconvénient à ce principe peut toutefois être que l'écart entre les températures du dessus 13a du support 13 et du fond de l'objet 3 (ou de sa base ferromagnétique) va demeurer assez proche.

Ainsi, en respectant ceci il y a un risque que dans certaines situations la température de l'objet 3 ne s'élève pas suffisamment, par exemple qu'une température de plus de 60°C ne puisse pas être atteinte, ce qui pourrait être insuffisant pour une situation autre qu'un maintien tiède d'une préparation.

Aussi est-il proposé ce qui suit : Dans la zone chauffée située sous l'inducteur et l'objet 3 (ou sa base ferromagnétique), le dessous du support 13 émet lui aussi par radiation et convection thermique naturelle vers le bas. Par ailleurs, cette zone du support ne sera favorablement en contact qu'avec le capteur de température 35, le reste des éléments de l'unité 20 de contrôle et de chauffage (hors ceux 19,35,41) étant en contact avec l'air ambiant sous le support, notamment dans le caisson fermé 43.

Ces émissions du support 13 vers le bas étant directement liées au flux de chaleur reçu par le dessus du support, il a été choisi d'augmenter le flux thermique dissipé (ici vers le bas) par ce dernier et ainsi faire chuter les températures du dessous de ce support 13.

Pour réaliser cela, la convection thermique naturelle va être transformée en convection thermique forcée, via des moyens de refroidissement du support 13 établissant en face inférieure 13b une température inférieure à celle du dessus 13a, ceci au moins dans l'environnement du capteur 35 et pendant une partie au moins du chauffage par induction magnétique de l'objet 3.

L'utilisation du(de) ventilateurs 27 peut alors être appropriée, en adaptant leur fonctionnement (énergie de soufflage libérée) de façon à créer un écart de température entre cette zone du dessous du support et l'objet 3 qui soit de l'ordre de 20°C à 50°C, typiquement 35°C à 45°C, ceci permettant d'atteindre une température d'objet 3 élevée, associée à une température suffisamment basse du support 13, typiquement 40°C sur le support alors qu'elle est de 80°C dans le récipient 11.

Il demeure que cet écart de température établi entre l'objet 3 et le support 13 dépendra de différents paramètres, y compris :
- le type d'objet 3 (matière du récipient, rendement thermique, taille, avec sans couvercle),
- le type de support 13 (matière, épaisseur, couleur, conductivité thermique),
- la température ambiante,
- l'entretoise 7 (épaisseur, forme, matière).

Par contre, une fois atteint la température souhaitée dans le récipient, celle-ci pourra rester fixe quelle que soit la quantité de matière alimentaire 9 à maintenir alors au chaud, cette « température souhaitée » pouvant être celle que l'utilisateur a choisie sur le clavier 39 et que la carte de commande 31 a traduit en énergie à délivrer (puissance, intensité du champ magnétique....temps, fréquence...).

Pour revenir brièvement sur la chaîne d'asservissement de l'unité 20, on notera que l'inducteur 15 pourra donc transmettre à l'objet 3 (sa base 5 ou sa pastille 50), via un champ magnétique (flèches 51 figure 5), une énergie dépendant de la consigne de puissance adressée par la carte de commande 31, en fonction des paramètres prédéfinis. Un flux de chaleur sera ainsi généré, y compris par convection et radiations thermiques vers le dessus du support 13. Par conduction thermique, celui-ci transmettra une partie du flux au capteur de température 35 placé à son contact, une autre partie étant dissipée par le refroidissement précité forcé du support. Le système de régulation (30,31,35) demandera plus ou moins de puissance à l'inducteur, en fonction de la consigne de régulation utilisateur (clavier 39) et de la température du support relevée par le capteur 35.

Dans cet asservissement, on pourra souhaiter tenir compte de l'influence du champ magnétique sur le capteur 35 (voir flèches 53 figure 5).

Ainsi, et comme déjà mentionné, on pourra avoir intérêt à ce que, recevant le champ induit par l'inducteur 15, le capteur 35 de température soit sensible à ce champ, de telle sorte que le capteur détecte une élévation de température quand l'inducteur 15 fonctionne.

En effet, s'il est sensible au champ magnétique, le capteur 35 va s'échauffer proportionnellement à l'intensité du champ généré. En pratique, cette élévation de température devrait être de l'ordre de 5°C.

Par ailleurs, pour prévenir une dérive de l'asservissement due à la prise en compte, par le capteur 35, de variations rapides de température (par exemple dans cette marge de 5°C) dues aux variations rapides d'intensité du champ magnétique, on pourra choisir de limiter l'énergie, telle la puissance, de sortie si la variation est trop rapide. Ceci permettra d'anticiper un échauffement trop rapide de l'objet 3 par rapport au temps de réponse du support 13 qui sera typiquement assez lent.

A cette étape de la description, il est apparu utile de revenir sur l'intérêt spécifique que l'on pourra trouver à ce que l'inducteur 15 soit commandé pour délivrer son énergie (telle sa puissance électrique) en fonction d'une pente prédéterminée d'élévation de température entrée en mémoire 42.

En effet, avec un support ayant une assez grande inertie thermique (λ>0.1 W/m.K et épaisseur de 4 à 40mm de préférence) l'utilisation d'une telle pente pourra permettre de résoudre le problème d'une élévation de température trop importante dans l'objet de rétention de chaleur, et plus précisément d'assurer des élévations de température tant de l'objet 3 que du support 13 de façon que la première soit à la fois suffisante et suffisamment rapide et que la seconde soit suffisamment faible pour ne pas altérer l'intégrité du support.

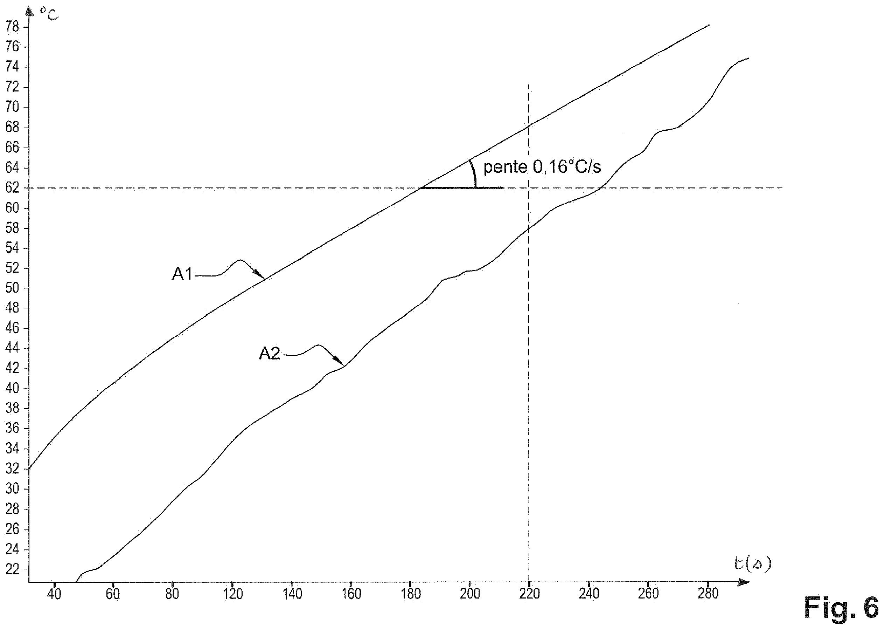

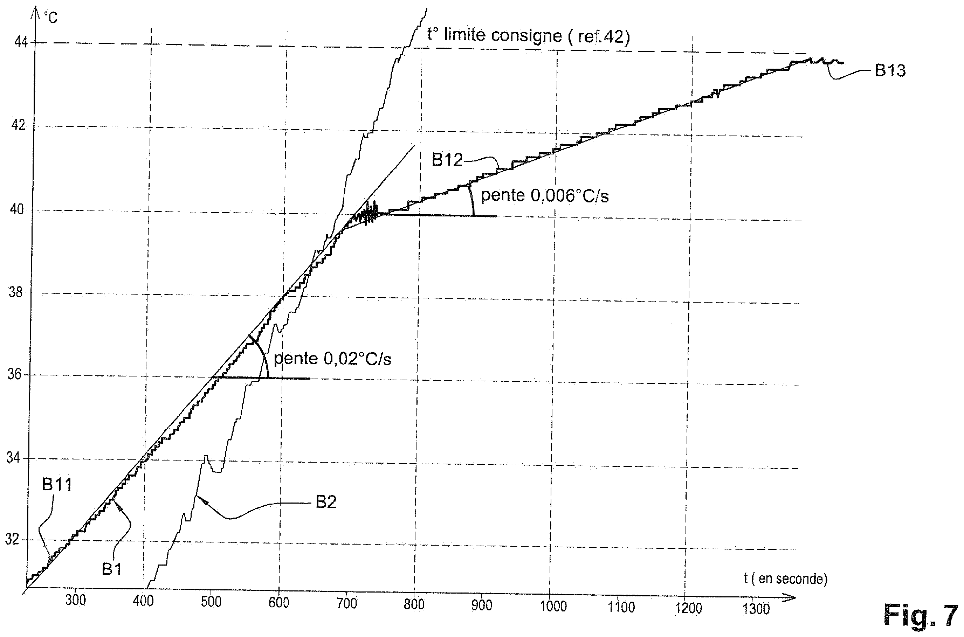

Avec en particulier une telle pente maximale inférieure à 0.04°C par seconde, et de préférence une première pente inférieure à 0.04°C par seconde, puis une seconde pente encore inférieure, pour les 3 à 10 derniers °C avant la consigne limite, la carte de commande 31 pourra, calée sur cette faible pente, imposer à l'inducteur 15 de limiter de façon appropriée l'énergie, et donc en particulier l'intensité du champ magnétique induit, comme illustré figures 6 et 7.

Sur ces figures, un même récipient contenant une même quantité d'eau, avec les mêmes conditions initiales, a été utilisé.

Figure 6, on voit deux courbes d'élévation de température, pour un chauffage par induction « conventionnel », à 3200W de puissance induite, sur un appareil non prévu pour chauffer un chafing-dish en disposant desdits moyens de limitation de l'énergie transmise qui limitent l'importance du champ électromagnétique induit pour éviter de surchauffer le support 13, sans sous-chauffer l'objet 3.

La courbe A1 montre une élévation de la température vue par un capteur correspondant au capteur 35. La pente est comprise entre 0.05°C et 0.25°C par seconde, ici de 0.16°C/s.

La courbe A2 montre l'élévation correspondante de la température de l'eau détecté via un capteur placé dans l'eau du récipient. Elle monte toujours, de façon sensiblement parallèle à la première courbe.

Figure 7, on voit deux courbes B1,B2 d'élévation de température, pour un chauffage par induction conforme à l'invention, sur un appareil prévu donc pour chauffer un chafing-dish en disposant desdits moyens de limitation de l'énergie transmise permettant d'éviter de surchauffer le support 13, sans sous-chauffer l'objet 3.

La courbe B1 montre une élévation de la température vue par le capteur 35. L'utilisateur a commandé, via le clavier 39, l'équivalent d'une élévation de la température de l'eau du récipient à 44°C, température jugée acceptable par l'appareil car correspondant, via des abaques de correspondance, à une température de capteur 35 de 25°C par exemple, inférieure à la température seuil prédéterminée entrée initialement en mémoire 42, par exemple de 35°C, inférieure elle-même à la température de dégradation du support 13, par exemple de 45°C.

La courbe B2 montre l'élévation correspondante de la température de cette eau détectée via le capteur placé dans l'eau du récipient. Elle monte toujours. Plus vite que la courbe B1.

La pente de la courbe B1 est d'abord (portion B11) comprise entre 0.015°C à 0.035°C par seconde, ici 0.02°C/s, puis, à 4°C avant la température limite de consigne (entrée en mémoire 42), passe à une seconde pente encore inférieure (portion B12), ici de 0.006°C/s, avant de passer à une pente sensiblement nulle (portion B13) à ou juste avant la consigne limite, ici de 44°C.

Ainsi, par rapport à une courbe de chauffage conventionnel par induction on aura noté, sur les courbes d'élévation de la température vue par le capteur 35 :
- une double pente d'élévation (B11,B12), puis une pente sensiblement nulle (portion B13) à ou juste avant la consigne limite, à comparer à la simple pente A1 ;
- une diminution de pente la plus marquée (B11) d'au moins 20% par rapport à la pente A1, et même ici avec un rapport de 1/80 entre elles (B11/A1).

## Revendications

1. Appareil pour chauffer un objet (3,5,50) de rétention de chaleur adapté à être chauffé par induction magnétique et utilisé pour lui-même chauffer ou maintenir au chaud un produit alimentaire, l'appareil comprenant une entretoise (7) interposée entre l'objet de rétention de chaleur et un support (13), **caractérisé en ce que** l'entretoise (7) présente une conductivité thermique inférieure à celle du support, pour limiter la conduction thermique entre l'objet de rétention de chaleur et le support, et ledit appareil comprend :
- une unité (20) de contrôle et de chauffage par induction comprenant :
-- un dispositif de chauffage (15,30) comprenant un inducteur (15) situé sous le support et adapté à créer un champ électromagnétique autour de l'objet de rétention de chaleur,
-- un capteur (35) de température situé sous le support (13) pour y relever la température du support,
-- des moyens (31) de commande de l'inducteur reliés au capteur de température pour que le champ électromagnétique soit induit en fonction des relevés du capteur de température (35),
-- et des moyens (42) de limitation de l'énergie transmise qui agissent sur les moyens de commande (31) de l'inducteur pour limiter l'importance dudit champ électromagnétique induit quand la température relevée atteint un seuil prédéterminé inférieur à une température de dégradation du support.

2. Appareil selon la revendication 1, qui comprend en outre des moyens (27) de refroidissement du support, établissant une différence de température entre le dessus (13a) et le dessous (13b) de ce support, au moins dans l'environnement du capteur de température, pendant une partie au moins du chauffage par induction magnétique de l'objet (3,5,50) de rétention de chaleur.

3. Appareil selon la revendication 2, où les moyens (27) de refroidissement du support (13) sont situés sous le support, dans l'environnement de l'unité de contrôle et de chauffage par induction, pour participer en outre à une régulation thermique de composants électroniques de l'inducteur ou des moyens (31) de commande de l'inducteur.

4. Appareil selon la revendication 2 ou 3, où les moyens de refroidissement du support (13) comprennent au moins un ventilateur (27).

5. Appareil selon l'une quelconque des revendications précédentes, dans lequel le support (13) est un plan de travail ayant une conductivité thermique supérieure à 0.1 W/m.K et perméable au champ magnétique.

6. Appareil selon l'une quelconque des revendications précédentes, dans lequel l'objet de rétention de chaleur comprend un récipient pour aliments ou un bloc (5,50) de rétention de chaleur.

7. Appareil selon l'une quelconque des revendications précédentes, où l'entretoise (7) comprend un coussin creux à interposer entre l'objet de rétention de chaleur et le support, à leur contact.

8. Appareil selon l'une quelconque des revendications précédentes, où le capteur (35) de température est sensible au champ électromagnétique et le reçoit quand l'inducteur (15) fonctionne, de sorte qu'il capte en conséquence une élévation de température.

9. Procédé pour chauffer un objet de rétention de chaleur adapté à être chauffé par induction magnétique et utilisé pour lui-même chauffer ou maintenir au chaud un produit alimentaire, le procédé comprenant des étapes où:
- une entretoise (7) est interposée entre l'objet (3,5,50) de rétention de chaleur et un support (13) situé dessous, l'entretoise ayant une conductivité thermique (À) inférieure à celle du support,
- par un inducteur (15) placé sous le support, on crée un champ électromagnétique autour de l'objet de rétention de chaleur, l'entretoise limitant alors une quantité de transfert de chaleur depuis l'objet de rétention de chaleur vers le support,
- pendant un tel chauffage par induction, on relève la température du support par un capteur (35) de température,
- on commande l'inducteur pour que le champ électromagnétique soit induit en fonction des relevés du capteur de température et d'une consigne (39) réglée par l'utilisateur, en limitant l'importance du champ électromagnétique induit quand la température relevée atteint un seuil prédéterminé inférieur à une température de dégradation du support.

10. Procédé selon la revendication 9, dans lequel on refroidit le support (13) au moins dans l'environnement du capteur de température (35) placé sous le support, de façon que la température en face inférieure (13b) du support soit alors inférieure à la température en face supérieure (13a) du support.

11. Procédé selon la revendication 9 ou 10 où, sous le support (13) et dans l'environnement d'une unité électronique de puissance (30) reliée fonctionnellement à l'inducteur (15), on dispose des moyens (27) de refroidissement du support, pour qu'ils participent en outre à une régulation thermique de composants électroniques de l'unité électronique de puissance (30).

12. Procédé selon l'une quelconque des revendications 9 à 11, où on refroidit le support (13) par l'intermédiaire d'au moins un ventilateur (27) pendant tout le chauffage par induction de l'objet de rétention de chaleur (3,5,50).

13. Procédé selon l'une quelconque des revendications 9 à 12, où :
- le capteur (35) de température du support est sensible au champ électromagnétique et le reçoit quand l'inducteur (15) fonctionne, de sorte qu'il relève en conséquence une élévation de température,
- des relevés de température du support par ledit capteur (35) de température, on déduit une vitesse de variation des températures relevées,
- et on limite l'importance du champ électromagnétique induit quand ladite vitesse de variation de température est supérieure à un seuil prédéterminé.

14. Procédé selon l'une quelconque des revendications 9 à 13, où l'inducteur (15) est commandé pour délivrer une énergie en fonction d'au moins une pente (B11,B12) prédéterminée d'élévation de température.

15. Procédé selon la revendication 14, où ladite au moins une pente (B11,B12) prédéterminée d'élévation de température est inférieure à 0.04°C par seconde, et de préférence comprend une première pente inférieure à 0.04°C par seconde, puis une seconde pente encore inférieure, pour les 5 à 10 derniers °C préalable à l'atteinte dudit seuil prédéterminé inférieur à la température de dégradation du support.

## Patentansprüche

1. Gerät zum Erhitzen eines wärmespeichernden Gegenstands (3, 5, 50), der sich dazu eignet, selbst zum Erhitzen oder Warmhalten eines Lebensmittels benutzt zu werden, wobei das Gerät ein Zwischenstück (7) zwischen dem wärmespeichernden Gegenstand und einem Träger (13) umfasst, **dadurch gekennzeichnet, dass** das Zwischenstück (7) eine Wärmeleitfähigkeit kleiner der Wärmeleitfähigkeit des Trägers aufweist, um die Wärmeleitung zwischen dem wärmespeichernden Gegenstand und dem Träger zu begrenzen, wobei besagtes Gerät folgendes umfasst:
- eine Kontroll- und Induktionserhitzungseinheit (20), die folgendes umfasst:
- eine Heizvorrichtung (15, 30), welche einen unter dem Träger befindlichen Induktor (15) umfasst und dazu geeignet ist, ein elektromagnetisches Feld um den wärmespeichernden Gegenstand herum zu erzeugen,
- ein unter dem Träger (13) befindlicher Temperaturfühler (35) zum Messen der Temperatur des Trägers,
- Mittel (31) zur Steuerung des Induktors, die mit dem Temperaturfühler verbunden sind, damit das elektromagnetische Feld entsprechend der Messungen des Temperaturfühlers (35) induziert wird,
- und Mittel (42) zur Begrenzung der übermittelten Energie, die auf die Bedienmittel (31) des Induktors einwirken, um den Umfang des besagten induzierten elektromagnetischen Feldes zu begrenzen, wenn die gemessene Temperatur einen bestimmten Grenzwert unterhalb einer Zersetzungstemperatur des Trägers erreicht.

2. Gerät nach Anspruch 1, welches des Weiteren Mittel zum Kühlen (27) des Trägers umfasst, welche eine Temperaturdifferenz zwischen der Oberseite (13a) und der Unterseite (13b) dieses Trägers herstellen, zumindest in der Umgebung des Temperaturfühlers, zumindest während eines Teils der Erhitzung des wärmespeichernden Gegenstands (3, 5, 50) durch magnetische Induktion.

3. Gerät nach Anspruch 2, in dem sich die Kühlmittel (27) des Trägers (13) unter dem Träger in der Umgebung der Kontroll- und Induktionserhitzungseinheit befinden, um darüber hinaus zu einer Wärmeregulierung elektronischer Bauteile des Induktors oder der Steuermittel (31) des Induktors beizutragen.

4. Gerät nach Anspruch 2 oder 3, in dem die Kühlmittel des Trägers (13) mindestens einen Lüfter (27) umfassen.

5. Gerät nach einem der vorhergehenden Ansprüche, in dem der Träger (13) eine Arbeitsfläche mit einer Wärmeleitfähigkeit größer 0,1 W/m.K ist und für das magnetische Feld durchlässig ist.

6. Gerät nach einem der vorhergehenden Ansprüche, in dem der wärmespeichernde Gegenstand einen Behälter für Lebensmittel oder einen wärmespeichernden Block (5, 50) umfasst.

7. Gerät nach einem der vorhergehenden Ansprüche, in dem das Zwischenstück (7) einen hohlen Puffer umfasst, der zwischen den wärmespeichernden Gegenstand und den Träger in Kontakt zu ihnen zu positionieren ist.

8. Gerät nach einem der vorhergehenden Ansprüche, indem der Temperaturfühler (35) empfindlich für das elektromagnetische Feld ist und dieses empfängt, wenn der Induktor (15) in Betrieb ist, so dass er folglich eine Erhöhung der Temperatur erkennt.

9. Verfahren zum Erhitzen eines wärmespeichernden Gegenstandes, der sich dazu eignet, durch magnetische Induktion erhitzt und selbst zum Erhitzen oder Warmhalten eines Lebensmittels benutzt zu werden, wobei das Verfahren Schritte umfasst, in denen:
- ein Zwischenstück (7) zwischen dem wärmespeichernden Gegenstand (3, 5, 50) und einen darunter befindlichen Träger (13) angeordnet wird, wobei das Zwischenstück eine Wärmeleitfähigkeit (Gamma) kleiner der des Trägers hat,
- man mittels eines unter dem Träger angeordneten Induktors (15) ein elektromagnetisches Feld um den wärmespeichernden Gegenstand herum erzeugt, wobei das Zwischenstück die Wärmeübertragungsmenge vom wärmespeichernden Gegenstand zum Träger begrenzt,
- man während einer solchen Erhitzung durch Induktion die Temperatur des Trägers durch einen Temperaturfühler (35) misst,
- man den Induktor so steuert, dass das elektromagnetische Feld unter Berücksichtigung der Messungen des Temperaturfühlers und eines vom Benutzer eingestellten Sollwerts (39) induziert wird, indem der Umfang des induzierten elektromagnetischen Feldes bei Erreichen eines bestimmten Temperaturgrenzwertes, der kleiner als die Zersetzungstemperatur des Trägers ist, begrenzt wird.

10. Verfahren nach Anspruch 9, indem man den Träger (13) zumindest in der Umgebung des unter dem Träger befindlichen Temperaturfühlers (35) abkühlt, so dass die Temperatur an der Unterseite (13b) des Trägers kleiner als die Temperatur an der Oberseite (13a) des Trägers ist.

11. Verfahren nach Anspruch 9 oder 10, in dem man unter dem Träger (13) und in der Umgebung einer Leistungselektronikeinheit (30), die funktional mit dem Induktor (15) verbunden ist, Mittel (27) zum Kühlen des Trägers anordnet, damit sie des Weiteren zu einer Wärmeregulierung der elektronischen Bauteile der Leistungselektronikeinheit (30) beitragen.

12. Verfahren nach einem der Ansprüche 9 bis 11, in dem man den Träger (13) während der Induktionserhitzung des wärmespeichernden Gegenstands (3, 5, 50) mithilfe von mindestens einem Lüfter (27) abkühlt.

13. Verfahren nach einem der Ansprüche 9 bis 12, in dem
- der Temperaturfühler (35) des Trägers empfindlich für das elektromagnetische Feld ist und es empfängt, wenn der Induktor (15) in Betrieb ist, so dass er folglich eine Erhöhung der Temperatur misst,
- man aus den Messungen der Temperatur des Trägers durch besagten Temperaturfühler (35) eine Schwankungsgeschwindigkeit für die gemessenen Temperaturen ableitet,
- man den Umfang des induzierten elektromagnetischen Feldes begrenzt, wenn besagte Temperaturschwankungsgeschwindigkeit über einen bestimmten Grenzwert hinausgeht.

14. Verfahren nach einem der Ansprüche 9 bis 13, in dem der Induktor (15) so gesteuert wird, dass er eine Energie unter Berücksichtigung von mindestens einer bestimmten Steigung der Temperaturerhöhung (B11, B12) liefert.

15. Verfahren nach Anspruch 14, in dem mindestens die eine bestimmte Steigung der Temperaturerhöhung (B11, B12) kleiner 0.04 °C pro Sekunde ist, und vorzugsweise eine erste Steigung kleiner 0.04 °C pro Sekunde und dann eine zweite, noch kleinere Steigung für die 5 bis 10 letzten Grad Celsius vor dem Erreichen des besagten Grenzwertes unterhalb der Zersetzungstemperatur des Trägers umfasst.

## Claims

1. A device for heating a heat retention object (3, 5, 50) adapted to be heated by magnetic induction and used to heat or keep warm foodstuff, in turn, with said device comprising a brace (7) interposed between the heat retention object and a support (13), **characterized in that** the brace (7) has a thermal conductivity below that of the support, in order to limit the thermal conduction between the heat retention object and the support, and said device comprises:
- a control and induction heating unit (20) comprising:
- a heating device (15, 30) which comprises an inductor (15) positioned under the support and adapted to create an electromagnetic field about the heat retention object,
- a temperature sensor (35) positioned under the support (13) to sense the temperature of the support there,
- inductor control means (31) connected to the temperature sensor so that the electromagnetic field is induced according to the sensing of the temperature sensor (35),
- and means (42) for limiting the transmitted energy which acts on the inductor control means (31) so as to limit the size of said electromagnetic field induced when the senses temperature reaches a predetermined threshold lower than a support deterioration temperature.

2. A device according to claim 1, which further comprises support cooling means (27) which creates a difference in temperature between the upper face (13a) and the lower face (13b) of such support, at least in the environment of the temperature sensor, during at least a part of heating by magnetic induction of the heat retention object (3, 5, 50).

3. A device according to claim 2, wherein the support (13) cooling means is positioned under the support, in the environment of the control and induction heating unit, to further participate in a thermal control of the electronic components of the inductor or of the inductor control means (31) .

4. A device according to claim 2 or 3, wherein the support (13) cooling means comprises at least one fan (27).

5. A device according to any one of the preceding claims, wherein the support (13) is a working plan with a thermal conductivity above 0.1W/m.K and permeable to the magnetic field.

6. A device according to any one of the preceding claims, wherein the heat retention object comprises a food container or a heat retention block (5, 50).

7. A device according to any one of the preceding claims, wherein the brace (7) comprises a hollow cushion to be interposed between the heat retention object and the support, in contact with same.

8. A device according to any one of the preceding claims, wherein the temperature sensor (35) is sensitive to the magnetic field and receives same when the inductor (15) is operating, so that it senses a rise in temperature, accordingly.

9. A method for heating a heat retention object adapted to be heated by magnetic induction and used to heat or keep warm foodstuff, in turn, with said method comprising steps wherein:
- a brace (7) is interposed between the heat retention object (3, 5, 50) and a support (13) positioned thereunder, with the brace (7) having a thermal conductivity (λ) below that of the support,
- using an inductor (15) positioned under the support, an electromagnetic field is created about the heat retention object, with the brace thus limiting the amount of heat transfer from the heat retention object to the support,
- during such induction heating, the temperature of the support is sensed by a temperature sensor (35),
- the inductor is controlled so that the electromagnetic field is induced according to the sensing of the temperature sensor (35), and a set point (39) defined by the user, while limiting the size of the electromagnetic field induced when the sensed temperature reaches a predetermined threshold lower than a support deterioration temperature.

10. A method according to claim 9, wherein the support (13) is cooled at least in the environment of the temperature sensor (35) positioned under the support, so that the temperature of the lower face (13b of the support is then lower than the temperature of the upper face (13a) of the support.

11. A method according to claim 9 or 10, wherein means (27) for cooling the support are placed under the support (13) and in the environment of a power electronic unit (30) operatively connected to the inductor (15), so that such means further participates in the thermal control of the electronic components of the power electronic unit (30).

12. A method according to any one of claims 9 to 11, wherein the support (13) is cooled using at least one fan (27) during the whole induction heating of the heat retention object (3, 5, 50).

13. A method according to any one of claims 9 to 12, wherein:
- the support temperature sensor (35) is sensitive to the magnetic field and receives same when the inductor (15) is operating, so that it can sense a rise in temperature, accordingly,
- a variation rate of the read temperatures is deduced from the support temperature sensing by said temperature sensor (35),
- and the size of the electromagnetic field induced, when said variation rate of temperature is above a predetermined threshold, is limited.

14. A method according to any one of claims 9 to 13, wherein the inductor (15) is controlled to deliver energy according to at least one predetermined temperature rise slope (B11, B12).

15. A method according to claim 14, wherein said at least one predetermined temperature rise slope (B11, B12) is less than 0.04°C per second, and preferably comprises a first slope of less than 0.04°C per second, and then a second still lower slope, for the last 5 to 10°C before said predetermined threshold below the support degradation temperature is reached.
